# FASCICULE DE BREVET EUROPEEN

(11) **EP 3 311 133 B1**
(45) Date de publication et mention de la délivrance du brevet: **12.02.2020**
(21) Numéro de dépôt: 16729908.0
(22) Date de dépôt: 16.06.2016
(51) Int. Cl.: G01N 1/22, G01F 22/00, G01F 22/02

(54) **DISPOSITIF DE MESURE DE VOLUMES D'EMANATION DE GAZ**
VORRICHTUNG ZUR MESSUNG DES VOLUMENS VON GASAUSTRITTEN
DEVICE FOR MEASURING THE VOLUME OF GAS EMANATIONS

(30) Priorité: 16.06.2015 FR 1555490
(43) Date de publication de la demande: 25.04.2018
(73) Titulaire: Commissariat à l'énergie atomique et aux énergies alternatives, 75015 Paris (FR)
(72) Inventeur: BRY, Alain, 37190 Valleres (FR); DESCARSIN, David, 37510 Ballan Mire (FR); GRAVOUEILLE, Morgane, 37140 Bourgueil (FR); LEJOSNE, Johann, 38260 La Cote Saint-André (FR)
(74) Mandataire: Brevalex
(86) Numéro de dépôt international: PCT/EP2016/063919
(87) Numéro de publication internationale: WO 2016/202936

(56) Documents cités:
- US-A- 3 875 626
- US-A- 5 099 679
- US-A- 5 437 201
- US-A- 5 604 297
- US-A- 5 859 365
- US-A- 5 942 699
- US-A1- 2010 236 320

## Description

Le sujet de l'invention présente un dispositif de mesure de volumes d'émanation de gaz.

Il a pour but de déterminer avec précision le volume global des gaz produits ou consommés à tout instant d'une réaction d'émission ou d'absorption de gaz, tout en confinant le gaz mesuré.

Les flux de gaz gérés par les activités industrielles ou de recherche circulent le plus souvent à l'intérieur des tuyauteries. Il est alors naturel de déterminer les volumes de gaz émis par des mesures des débits passant par la tuyauterie, ou par des mesures directes de volume, par un compteur volumétrique. La mesure du débit demande une certaine stabilité du flux de gaz, qui doit rester dans la gamme de mesure de l'appareil et dans sa plage de temps de réponse. Cette dernière contrainte est plus souple avec les compteurs volumétriques, qui permettent au contraire d'accéder directement au volume même en cas de variation importante du débit instantané du gaz, grâce à leur fonctionnement cumulatif, à condition de respecter pour eux aussi la gamme de mesure prévue, en particulier le débit minimum.

Dans les processus industriels où intervient de la combustion, les dosages s'effectuent souvent en utilisant un débit de gaz d'acheminement. Le transport des gaz émis conduit à des analyseurs en ligne ou à des moyens de prélèvement. Les stations d'incinération de déchets figurent parmi les exemples courants de ces installations. Le document US 2010/0236320 A1 est aussi représentatif de procédés de ce genre; il sert de préambule à la revendication indépendante. Plusieurs inconvénients affectent ces procédés de mesure lorsque de petits volumes de gaz émis sont concernés. La collecte des gaz impose d'abord de créer à chaque instant un flux artificiel, même en l'absence de dégagement. On arrive alors au volume de gaz émis à partir du débit dans la tuyauterie et des concentrations mesurées. Mais le gaz d'acheminement dilue les gaz d'intérêt et augmente la contrainte de sensibilité des analyseurs. Il est possible que certains gaz peu concentrés ne soient pas détectés. Le volume de gaz émis peut aussi être mesuré de façon très imprécise, puisqu'il est calculé à partir des variations de débits et de concentration des différentes espèces gazeuses. Le procédé dépend aussi directement de la fréquence d'échantillonnage des prélèvements de gaz, de sorte qu'un pic intense et bref peut devenir invisible pour les instruments si la fréquence d'échantillonnage est trop faible. Ces procédés sont donc peu adaptés à des situations où les gaz peuvent être émis de façon irrégulière et brusque, sous forme de pics de production pendant des temps très brefs.

Il est possible aussi de mesurer la quantité de gaz après avoir confiné l'objet qui les produit dans un volume étanche. Le volume de gaz émis peut être mesuré grâce à l'augmentation de pression dans l'enceinte, en connaissant au préalable son volume. Toutefois, le volume de gaz dégagé par l'objet étant souvent dépendant de la différence entre sa pression interne et la pression dans l'enceinte, les résultats sont biaisés par rapport à un comportement à la pression atmosphérique. Ces problèmes deviennent manifestes lorsqu'on doit étudier des équilibres physiques et chimiques réversibles, puisqu'ils dépendent de la pression ambiante.

Une idée pour échapper à cet inconvénient consisterait à pourvoir l'enceinte d'une portion souple, telle qu'une baudruche, qui demeure dans un milieu à pression constante, notamment atmosphérique. Les gaz dégagés traversent un conduit menant à la baudruche, qui s'emplit tout en continuant à confiner les gaz à mesure qu'ils sont émis. Un compteur volumétrique est placé sur la tuyauterie pour mesurer le volume émis. Des mesures précises sont alors possibles dans bien des cas, mais des limitations du procédé sont encore rencontrées. Tout d'abord, une condensation importante est souvent observée dans le compteur volumétrique. Les compteurs volumétriques sont ensuite étalonnés pour un gaz de nature donnée, comme l'air, ou le méthane pour les installations de distribution de gaz de ville ; mais si le gaz émis est un mélange de nature inconnue, les mesures du compteur sont biaisées. Un troisième inconvénient est qu'une partie du volume gazeux reste présente dans l'enceinte, autour de l'objet d'émission, et ne traverse pas le compteur volumétrique. Son volume peut éventuellement être estimé, mais on constate que sa composition est souvent différente de celle du gaz ayant traversé le compteur, et qu'aucun mélange ne se fait entre ces deux parties du volume, ce qui est désavantageux quand une analyse quantitative des concentrations doit être faite.

Le compteur peut aussi réagir avec certains gaz et fausser les mesures en conséquence. Il est enfin nécessaire de le nettoyer, puis de le reconditionner avant une réutilisation, mais cela peut être impossible si sa constitution ne s'y prête pas.

Enfin, US 3 875 626 A décrit un dispositif destiné à mesurer la capacité pulmonaire d'un individu, où l'air expiré entre dans une enveloppe souple dans une enceinte rigide. La mesure s'effectue ensuite en remplissant l'enceinte de gaz originaire d'une source extérieure pour refouler l'air expiré vers l'extérieur de l'enceinte et vider la poche. Mais cette mesure est elle aussi sujette à des imprécisions en faisant appel à un nouveau gaz, originaire d'un milieu extérieur à l'atmosphère ambiante (la source de gaz comprimé) dont la température n'est par exemple pas bien maîtrisée. Une autre cause d'imprécision de la mesure est qu'elle porte sur une durée de temps de vidage de la poche, indépendamment du débit d'écoulement du gaz comprimé. Enfin, la mesure est différée et porte forcément sur un volume final, sans permettre donc de déterminer une vitesse de l'évacuation ni les irrégularités éventielles de cette dernière.

L'invention a été conçue afin de remédier à ces inconvénients, par une construction perfectionnée du dispositif, reprenant l'emploi d'une portion d'enceinte souple pour confiner les gaz à pression constante et notamment atmosphérique.

Sous une forme générale, l'invention concerne ainsi un dispositif de mesure d'émanation de gaz, , un conduit de sortie (13) s'ouvrant sur un milieu à pression constante, et un compteur de gaz (16) et une soupape (15) sur le conduit de sortie, caractérisé par une enveloppe souple (4) en matière non étirable reliée à la cellule par un conduit de communication (5), une enceinte (9) contenant l'enveloppe souple, un circuit interne du dispositif, comprenant la cellule (2) et le conduit de communication (5) communiquant avec l'intérieur de l'enveloppe souple (4) étant en totalité et à tout moment étanche aux gaz, le conduit de sortie (13) débouchant dans l'enceinte (9) et la soupape étant une soupape anti-retour (15), autorisant seulement la sortie du gaz.

Un conduit de sortie relie l'intérieur de l'enceinte à un milieu à pression constante. Un compteur de gaz - compteur volumétrique ou débitmètre - est intercalé sur le conduit de sortie. En reliant le compteur volumétrique à l'intérieur de l'enceinte dans laquelle l'enveloppe souple est contenue, la mesure du volume ne porte pas directement sur le gaz émis, mais sur le gaz de composition connue présent à l'origine dans l'enceinte. Le volume de gaz émis n'est pas mesuré directement par le compteur volumétrique, qui ne peut pas non plus réagir chimiquement avec lui. Le compteur mesure toujours le même gaz de composition connue et de température également connue et invariable, généralement de l'air, ce qui évite de devoir corriger son étalonnage, lequel peut s'avérer impossible sans connaître précisément les proportions du mélange de gaz dégagé et de le nettoyer après chaque opération. De plus, la mesure est continue et non différée, ce qui permet de mesurer non seulement le volume total émis, mais sa vitesse de variation en fonction du temps.

Selon un perfectionnement, la cellule et l'enveloppe souple sont reliées par un second conduit de communication, qui est muni d'un circulateur de gaz. Quand cette disposition est présente, il est possible d'établir une circulation de gaz entre la cellule et l'enveloppe souple, afin d'homogénéiser la composition des gaz émis.

Selon encore un autre perfectionnement, le dispositif comprend un conduit d'entrée débouchant dans l'enceinte et s'ouvrant après passage dans un second compteur volumétrique sur le milieu à pression constante. Le conduit de sortie et le conduit d'entrée sont munis de soupapes anti-retour de sens opposés entre l'enceinte et le milieu à pression constante. Cette disposition permet de comptabiliser une consommation de gaz interne à l'essai en cours dans l'enceinte, conduisant à une réduction du volume de l'enveloppe souple, qui est alors mesurée par le second compteur.

L'enveloppe souple est en matière non étirable, afin de garantir que son contenu reste à pression constante. Elle peut aussi être pourvue, notamment dans ce cas, d'un conduit d'exutoire débouchant dans l'enceinte et muni d'une soupape à seuil de pression d'ouverture, afin d'empêcher son éclatement en cas de remplissage complet, le gaz émis en excès étant alors déchargé dans l'enceinte.

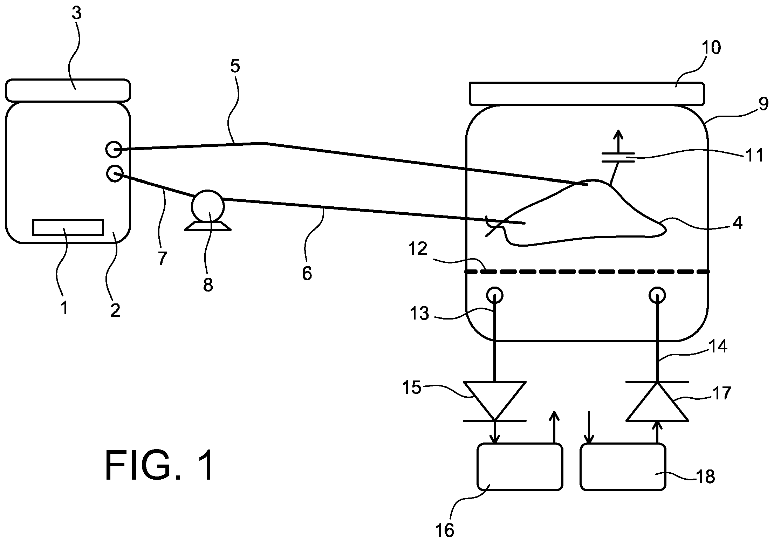

L'invention sera maintenant décrite en liaison à la Figure, qui en développent les différents aspects, caractéristiques et avantages, pour un mode de réalisation purement illustratif; cette Figure est une vue d'ensemble des principaux éléments du dispositif.

Un échantillon 1 devant produire du gaz est enfermé dans une cellule 2 munie d'un couvercle d'accès 3. L'intérieur de la cellule 2 est relié à une baudruche 4, qui est une enveloppe souple, par un premier tuyau 5 et un second tuyau, parallèle au premier et composé de deux parties 6 et 7 séparées par un circulateur 8. La baudruche 4 est contenue dans une enceinte 9, qui peut être un caisson étanche, aussi muni d'un couvercle d'accès 10. La paroi du couvercle d'accès 10, ou d'une autre partie de l'enceinte 9, peut être transparente. La baudruche 4 communique avec l'intérieur de l'enceinte 9, mais seulement par l'intermédiaire d'un conduit d'évacuation 11, muni d'une soupape conçue pour s'ouvrir en cas de surpression importante de l'intérieur de la baudruche 4 par rapport à celui de l'enceinte 9 et rester fermée le reste du temps. Une grille 12 divise l'intérieur de l'enceinte 9 en deux compartiments communiquant entre eux; la baudruche 4 est placée dans le compartiment supérieur; un conduit de sortie 13 et un conduit d'entrée 14 débouchent dans le compartiment inférieur. Le conduit de sortie 13 est muni d'une soupape 15, permettant seulement la sortie du contenu de l'enceinte 9 vers l'extérieur, ainsi que d'un compteur volumétrique 16, mesurant le débit passant par le conduit de sortie 13, alors que le conduit d'entrée 14 est muni d'une soupape 17, autorisant seulement la rentrée de gaz extérieur dans l'enceinte 9, et d'un autre compteur volumétrique 18. La totalité du circuit interne communiquant avec l'intérieur de la baudruche 4, et comprenant la cellule 2, le premier tuyau 5 et le second tuyau composé des parties 6 et 7 et du circulateur 8, est étanche aux gaz à tout moment. De même, le circuit communiquant avec l'intérieur de l'enceinte 9 et comprenant le conduit de sortie 13 et le conduit d'entrée 14 est étanche au gaz lorsque les soupapes 15 et 17 sont fermées et ainsi bouchent lesdits conduits 13 et 14. Les compteurs volumétriques 16 ou 18 pourraient être complétés ou remplacés par des débitmètres.

On a représenté ici un système communiquant à l'air libre par les conduits 13 et 14. Le système pourrait aussi communiquer à un autre volume dans lequel une pression définie serait régulée.

La cellule 2 peut disposer d'orifices permettant de réaliser des prélèvements, des dilutions, des évacuations, des mesures sur les gaz ou une sollicitation électrique, thermique ou mécanique sur l'échantillon 1.

Quand une réaction émissive de gaz a lieu dans l'échantillon 1, une partie du gaz émis gonfle la baudruche 4. L'intérieur de l'enceinte 9 reste à pression uniforme, et le même volume que le volume de gonflage de la baudruche 4 en est chassé par le conduit de sortie 13, où il est mesuré par le compteur volumétrique 16. Le circulateur 8 sert à homogénéiser la composition du gaz à tout moment, entre le réacteur 2 et la baudruche 4. La baudruche 4 est choisie pour posséder un volume de remplissage plus grand que le volume estimé d'émission des gaz. Si toutefois un volume plus important était produit, une surpression apparaîtrait immédiatement, puisque la baudruche 4 est en matière non extensible, et l'excès de gaz serait relâché dans l'enceinte 9 par l'exutoire 11. Le conduit d'entrée 14 permet de maintenir encore la pression dans l'enceinte 9 à la valeur ambiante, si l'émission du gaz est remplacée par une absorption et que le volume de la baudruche 4 diminue.

On réalise donc une mesure à la fois indirecte (portant sur un autre gaz que celui qui est émis) pour une plus grande précision des mesures, et immédiate, apte donc à restituer une fonction de volume émis d'après le temps. Il est à noter que le dispositif peut fonctionner sans électricité si les capteurs volumétriques 16 et 18 sont des capteurs du genre employé pour la fourniture de gaz domestique par exemple, et qui indiquent à tout instant le volume. Il se prête donc bien à des mesures pouvant être longues et précédées d'une attente importante, ce qui se vérifie pour l'essai de batteries au lithium par exemple, où la mesure commence avec une rupture de l'enveloppe à un instant imprévisible.

Le caractère complètement inerte (sans dispositif de commande ou de commutation par exemple) de certaines réalisations du dispositif est aussi appréciable.

## Revendications

1. Dispositif de mesure de volumes d'émanation de gaz issu d'un échantillon (1), comprenant une cellule (2) dans laquelle le gaz est émis, un conduit de sortie (13) s'ouvrant sur un milieu à pression constante, et un compteur de gaz (16) et une soupape (15) sur le conduit de sortie, **caractérisé par** une enveloppe souple (4) en matière non étirable reliée à la cellule par un conduit de communication (5), une enceinte (9) contenant l'enveloppe souple, un circuit interne du dispositif, comprenant la cellule (2) et le conduit de communication (5) communiquant avec l'intérieur de l'enveloppe souple (4), étant en totalité et à tout moment étanche aux gaz, le conduit de sortie (13) débouchant dans l'enceinte (9) et la soupape étant une soupape anti-retour (15) autorisant seulement la sortie du gaz.

2. Dispositif de mesure de volumes d'émanation de gaz suivant la revendication 1, **caractérisé en ce qu'**il comprend un conduit d'entrée (14) débouchant dans l'enceinte et s'ouvrant sur le milieu à pression constante, et un second compteur de gaz (18) sur le circuit d'entrée, le conduit d'entrée étant muni d'une soupape (17) anti-retour autorisant seulement l'entrée de gaz dans l'enceinte.

3. Dispositif de mesure de volumes d'émanation de gaz suivant l'une quelconque des revendications 1 à 2, **caractérisé en ce que** la cellule (2) et l'enveloppe souple (4) sont reliées par un second conduit de communication (6, 7), qui est muni d'un circulateur (8) de gaz.

4. Dispositif de mesure de volumes d'émanation de gaz suivant l'une quelconque des revendications 1 à 3, **caractérisé en ce que** l'enveloppe souple est munie d'un conduit d'évacuation (11) débouchant dans l'enceinte et muni d'une soupape à seuil de pression d'ouverture.

5. Dispositif de mesure de volumes d'émanations de gaz suivant l'une quelconque des revendications 1 à 4, **caractérisé en ce qu'**un circuit du dispositif communiquant avec l'intérieur de l'enceinte (9) et comprenant les conduits d'entrée (14) et de sortie (13) est étanche au gaz lorsque les soupapes anti-retour (15, 17) sont fermées.

6. Dispositif de mesure de volumes d'émanations de gaz suivant l'une quelconque des revendications 1 à 5, **caractérisé en ce qu'**un couvercle (10) de l'enceinte (9) ou une autre partie de l'enceinte (9) est une paroi transparente.

7. Dispositif de mesure de volumes d'émanations de gaz suivant l'une quelconque des revendications 1 à 6, **caractérisé en ce que** le compteur de gaz (16) ou (18) consiste en un capteur volumétrique et/ou un débitmètre.

8. Dispositif de mesure de volumes d'émanations de gaz suivant l'une quelconque des revendications 1 à 7, **caractérisé en ce que** le milieu à pression constante est l'air libre ou un dispositif permettant de réguler une pression définie.

9. Dispositif de mesure de volumes d'émanations de gaz suivant l'une quelconque des revendications 1 à 8, **caractérisé en ce que** la cellule (2) peut disposer d'orifices permettant de réaliser des prélèvements, des dilutions, des évacuations, des mesures sur les gaz ou une sollicitation électrique, thermique ou mécanique sur l'échantillon (1).

## Patentansprüche

1. Vorrichtung zum Messen von Gasaustrittsvolumen aus einer Probe (1), enthaltend eine Zelle (2), in der das Gas ausgegeben wird, eine Auslassleitung (13), die sich zu einem Medium unter konstantem Druck hin öffnet, sowie einen Gaszähler (16) und ein Ventil (15) an der Auslassleitung, **gekennzeichnet durch**
eine nachgiebige Hülle (4) aus nicht dehnbarem Material, die über eine Verbindungsleitung (5) mit der Zelle verbunden ist, ein Gehäuse (9), das die nachgiebige Hülle beinhaltet, einen Innenkreislauf der Vorrichtung, der die Zelle (2) und die Verbindungsleitung (5) enthält, die mit dem Inneren der nachgiebigen Hülle (4) verbunden ist und vollständig und jederzeit gasdicht ist, wobei die Auslassleitung (13) in das Gehäuse (9) mündet und das Ventil ein Rückschlagventil (15) ist, das nur den Auslass von Gas ermöglicht.

2. Vorrichtung zum Messen von Gasaustrittsvolumen nach Anspruch 1,
**dadurch gekennzeichnet, dass**
sie eine Einlassleitung (14) enthält, die in das Gehäuse mündet und sich zu dem Medium unter konstantem Druck hin öffnet, sowie einen zweiten Gaszähler (18) im Einlasskreislauf, wobei die Einlassleitung mit einem Rückschlagventil (17) versehen ist, das nur den Einlass von Gas in das Gehäuse ermöglicht.

3. Vorrichtung zum Messen von Gasaustrittsvolumen nach einem der Ansprüche 1 bis 2,
**dadurch gekennzeichnet, dass**
die Zelle (2) und die nachgiebige Hülle (4) über eine zweite Verbindungsleitung (6, 7) verbunden sind, die mit einem Gaszirkulator (8) versehen ist.

4. Vorrichtung zum Messen von Gasaustrittsvolumen nach einem der Ansprüche 1 bis 3,
**dadurch gekennzeichnet, dass**
die nachgiebige Hülle mit einer Ablaufleitung (11) versehen ist, die in das Gehäuse mündet und mit einem Ventil mit Öffnungsdruckschwelle versehen ist.

5. Vorrichtung zum Messen von Gasaustrittsvolumen nach einem der Ansprüche 1 bis 4,
**dadurch gekennzeichnet, dass**
ein Kreislauf der Vorrichtung, der mit dem Inneren des Gehäuses (9) in Verbindung steht und die Einlass- (14) und Auslassleitung (13) enthält, dann gasdicht ist, wenn die Rückschlagventile (15, 17) geschlossen sind.

6. Vorrichtung zum Messen von Gasaustrittsvolumen nach einem der Ansprüche 1 bis 5,
**dadurch gekennzeichnet, dass**
ein Deckel (10) des Gehäuses (9) oder ein anderes Teil des Gehäuses (9) eine durchsichtige Wand ist.

7. Vorrichtung zum Messen von Gasaustrittsvolumen nach einem der Ansprüche 1 bis 6,
**dadurch gekennzeichnet, dass**
der Gaszähler (16) bzw. (18) aus einem Volumensensor und/oder Durchflussmesser besteht.

8. Vorrichtung zum Messen von Gasaustrittsvolumen nach einem der Ansprüche 1 bis 7,
**dadurch gekennzeichnet, dass**
das Medium unter konstantem Druck Freiluft oder eine Einrichtung ist, mit der ein definierter Druck eingestellt werden kann.

9. Vorrichtung zum Messen von Gasaustrittsvolumen nach einem der Ansprüche 1 bis 8,
**dadurch gekennzeichnet, dass**
die Zelle (2) Öffnungen aufweisen kann, die Probenahmen, Verdünnungen, Ableitungen, Gasmessungen oder eine elektrische, thermische oder mechanische Beaufschlagung der Probe (1) gestatten.

## Claims

1. A device for measuring volumes of gas release from a sample (1), comprising a cell (2) in which the gas is emitted, an outlet duct (13) opening onto a constant pressure medium, and a gas meter (16) and a valve (15) on the outlet duct, **characterised by** a flexible shell (4) of a non-stretchable material connected to the cell by a communication duct (5), an enclosure (9) including the flexible shell, an inner circuit of the device, comprising the cell (2) and the communication duct (5) communicating with inside of the flexible shell (4), being always completely gas-tight, the outlet duct (13) leading into the enclosure (9) and the valve being a check valve (15) only allowing the gas to exit.

2. The device for measuring volumes of gas release according to claim 1, **characterised in that** it comprises an inlet duct (14) leading into the enclosure and opening onto the constant pressure medium, and a second gas meter (18) on the inlet circuit, the inlet duct being provided with a check valve (17) only allowing the gas to enter the enclosure.

3. The device for measuring volumes of gas release according to any of claims 1 to 2, **characterised in that** the cell (2) and the flexible shell (4) are connected by a second communication duct (6, 7), which is provided with a gas circulator (8).

4. The device for measuring volumes of gas release according to any of claims 1 to 3, **characterised in that** the flexible shell is provided with an exhaust duct (11) leading into the enclosure and provided with an opening pressure threshold valve.

5. The device for measuring volumes of gas release according to any of claims 1 to 4, **characterised in that** a circuit of the device communicating with inside of the enclosure (9) and comprising inlet (14) and outlet (13) ducts is gas-tight when the check valves (15, 17) are closed.

6. The device for measuring volumes of gas release according to any of claims 1 to 5, **characterised in that** a cover (10) of the enclosure (9) or another part of the enclosure (9) is a transparent wall.

7. The device for measuring volumes of gas release according to any of claims 1 to 6, **characterised in that** the gas meter (16) or (18) consists of a volumetric sensor and/or a flowmeter.

8. The device for measuring volumes of gas release according to any of claims 1 to 7, **characterised in that** the constant pressure medium is free air or a device for controlling a defined pressure.

9. The device for measuring volumes of gas release according to any of claims 1 to 8, **characterised in that** the cell (2) can have holes for performing collections, dilutions, discharges, measurements on gases or an electric, thermal or mechanical load on the sample (1).
